# EUROPEAN PATENT SPECIFICATION

(11) **EP 0 599 231 B1**
(45) Date of publication and mention of the grant of the patent: **20.06.2001**
(21) Application number: 93118691.0
(22) Date of filing: 20.11.1993
(51) Int. Cl.: D01F 1/10, D01F 6/84, A41D 19/015

(54) **Filled fiber**
Gefüllte Faser
Fibre chargée

(30) Priority: 24.11.1992 US 980813
(43) Date of publication of application: 01.06.1994
(60) Divisional application: 00126033.0
(73) Proprietor: Honeywell International, Inc., Morristown, New Jersey 07962 (US)
(72) Inventor: Sandor, Robert B., Cliffside Park, New Jersey 07010 (US); Carter, Michelle Collins, Madison, New Jersey 07940 (US)
(74) Representative: von Kreisler, Alek, Dipl.-Chem.

(56) References cited:
- EP-A- 0 115 967
- EP-A- 0 376 323
- GB-A- 2 006 242
- US-A- 4 912 781
- US-A- 5 179 192

## Description

### Field of the Invention

This invention relates to a filled fiber.

### Background of the Invention

It is known to use a small amount of particulate titanium dioxide in polyester fiber as a delustrant. Also used in polyester fiber is a small amount of colloidal silicon dioxide. The silicon dioxide is used to improve gloss.

Also known, as illustrated by U.S. Patents 4,533,685, 4,557,857, 4,778,820, 4,871,890, 4,921,755 and 5,069,803, are metallized polymers. The metal may be in the form of flakes, fiber or powder, and may be a transition metal or heavy metal. The metallized polymer may be formed by mixing particulate metal and polymer, or from a melt of metal and polymer. As exemplified by U.S. Patent No. 4,960,818, a compacted blend of PEEK powder and hard metal filler particles is known. Also known as illustrated by U.S. Patent No. 4,592,961 is a metal flake-filled, flexible coating composition formed from high tensile, aromatic-polyester resin and vinylidene chloride polymer.

Liquid crystal or crystalline polymers (LCPs) are typically characterized by high strength. LCPs reinforced with glass fiber, carbon fiber, mineral and graphite are commercially available under the registered trade mark VECTRA from Hoechst Celanese Corporation of Somerville, New Jersey. Filled liquid crystalline polymers are also disclosed in EP 0 376 323 A2.

As exemplified by U.S. Patent Nos. 2,328,105 and 3,185,751, a flexible, X-ray shield glove may be made by treating sheets of a suitable porous material with a finely divided, heavy metal which may be lead, barium, bismuth and tungsten, or may be made from a latex or dispersion containing heavy metal particles. More recently, as indicated by U.S. Patent Nos. 4,004,295, 4,384,449 and 4,470,251 and EP 458,343, gloves providing cut-resistance have been made from yarn including flexible metal wire or consisting of high tensile strength fibers, or as illustrated by U.S. Patent No. 5,020,161, gloves providing protection against corrosive liquids, have been made with a metal film layer. Cut-resistant gloves are beneficially utilized in the meat-packing industry.

A drawback with gloves made from yarn including flexible metal wire is hand fatigue with resultant decreased productivity and increased likelihood of injury. Moreover, with extended wear and flexing, the wire may fatigue and break, with cuts and abrasions to the hands and contamination of foodstuff. In addition, the wire will act as a heat sink when a laundered glove is dried at elevated temperatures, which may reduce tensile strength of other yarn fiber, glove protection and glove life.

Improved flexibility and uncomplicated laundering are desirable in cut-resistant, protective apparel. Therefore, there is a need for a flexible, high tensile strength, cut-resistant fiber that retains its properties when routinely laundered and that resists flexural fatigue. Such a fiber may be advantageously used in making protective apparel, in particular highly flexible, cut-resistant gloves.

### Summary of the Invention

The present invention relates to a fiber comprising a liquid crystalline polymer filled with a material having a Mohs Hardness value of at least 3, wherein said material is present in an amount of from 0.02 to 5 wt.% and the average particle size of the filler is less than 20 µm.

In accordance with the present invention, a fiber comprising a polymer filled with a hard material is provided. Advantageously, the polymer is a melt-processable, liquid crystalline polymer, and a filler that imparts cut resistance to the fiber is used. In this aspect, the invention is based upon a filled liquid crystalline polymer, and the filler may be a metal. Other high tensile strength fibers may be beneficially filled with a metal.

A filled fiber in accordance with the present invention, is flexible. Beneficially, the filler is generally uniformly distributed throughout the fiber. Advantageously, the filled fiber is knittable. Protective apparel may be made from the fiber.

### Detailed Description of the Invention

As indicated above, the present invention is advantageously based upon a filled, liquid crystalline polymer. According to the present invention, a flexible, cut-resistant fiber useful for the manufacture of protective apparel, may be produced when a filler that imparts cut resistance is used.

Particularly beneficial as filled polymers for use in the present invention, are thermotropic LCPs. Thermotropic LCPs exist in a liquid-crystalline state above their melting point, are anisotropic in the melt phase, and are melt processable. Thermotropic LCPs are useful for the manufacture of high strength fiber.

Thermotropic LCPs include, but are not limited to, wholly and non-wholly aromatic polyesters, aromatic-aliphatic polyesters, aromatic polyazomethenes, aromatic polyester-carbonates, and wholly aromatic and non-wholly aromatic polyester-amides. A variety of thermotropic LCPs are described in U.S. Patent Nos. 4,540,737 and 4,799,985 and EP 0 376 323 A2.

The most preferred polymers for use in this invention include polyesters, with particularly preferred thermotropic LCPs being wholly aromatic polyesters. By the term "wholly aromatic polyester" as used in connection with this invention, is meant that the polyester backbone is made of aromatic monomers. Especially useful in this invention as a filled polymer, is a thermotropic, wholly aromatic polyester prepared from p-hydroxybenzoic acid and 6-hydroxy-2-naphthoic acid monomers, sold under the registered trade mark VECTRA, with the fiber form being available commercially under the registered trade mark VECTRAN from Hoechst Celanese Corporation of Charlotte, North Carolina.

Suitability of a filler depends in part upon the end use intended for the filled resin. This invention is especially concerned with highly flexible, cut-resistant apparel. In this regard, this invention is based upon the discovery that a flexible, flexural fatigue-resistant and cut-resistant fiber may be made from a suitable polymer filled with a material that imparts cut resistance. The material may be a metal such as an elemental metal or metal alloy, or may be nonmetallic. Particularly suitable fillers have a Mohs Hardness value in the range of 4 or 5 to in excess of 6. Iron, steel and tungsten, which has a Mohs value ranging from 6.5 to 7.5, are illustrative. Equally useful are materials such as a metal carbide, for example tungsten carbide. Generally speaking, any filler may be used that has a Mohs Hardness value of 3 or more.

A particulate form of the filler may be conveniently used, with a powder form being generally suitable. By "powder" is meant for purposes of this invention, having an average particle size of less than 20 microns, preferably in the range of 0.2 to 3 microns, for instance an average particle size of 0.4 to 1.0 micron. Selection of an appropriate particle size may depend upon the processing intended for the filled polymer. For example, when spinning a powder-filled, polymeric melt into a fiber, the filler should be of small enough particle size to easily pass through the spinneret apertures.

A minor percentage of the filler will be used, typically in the range of from 0.02 to 5 wt.%, beneficially up to 2 wt.%, more particularly from 0.05 to 1 wt.%. For practical purposes, with respect to cut-resistant apparel, the least amount of the filler will be used as is consistent with obtaining the desired cut resistance and flexural fatigue resistance. Moreover, an appropriate ratio of the filler to polymer may depend upon the downstream processing contemplated. Thus, it may be difficult to melt spin an LCP containing 2 wt.% or more of a filler in powder form. Furthermore, too much filler may weaken fiber tenacity. In any event for cut-protective apparel, the amount of the filler will be sufficient to provide fiber with enhanced cut resistance.

In accordance with the present invention, a filled resin is prepared. To this end, a suitable proportion of a melt-processable, liquid crystalline polymer and the filler may be blended in a conventional extruder at an elevated temperature sufficient to provide a molten mixture. The blending may be carried out in an inert atmosphere such as a nitrogen atmosphere. The inert atmosphere may be continuously purged by flow of inert gas. Generally speaking, any technique that will provide a generally uniform distribution of the filler in the resin, may be used.

In accordance with the present invention, filled fibers are prepared from the filled resin. The term "fibers" as used herein, shall refer to a unit of matter that forms the basic elements of fabrics and other textile structures. Non-limiting examples of the foregoing definition are monofilaments, multifilaments, yarns and so forth.

Filled fiber may be spun from a filled, melt-processable LCP as now described. The filled LCP is fed to a conventional extruder, and molten material at an elevated temperature issues from the extruder and is passed to a metering pump, then through a filter pack, and through the spinneret. The melt should be free of particulate filler of greater size than the cross-sectional diameter of the spinneret apertures. The resultant fibers converge into a lubricant guide and onto a take up roll, and are forwarded to a winder unit. Beneficially, the filler is generally uniformly distributed throughout the fiber.

Protective apparel may be knit or otherwise made from a filled fiber in accordance with the present invention, by using conventional methods and machinery. Advantageously, a cut-resistant, safety glove designed for use in food processing industries, may be manufactured from the fiber. Such a glove is highly flexible and readily cleanable. The filled fiber resists flexural fatigue. Other protective apparel such as cut-resistant aprons for use in meat processing and chaps, may likewise be made from the fiber.

### PREPARATION OF FILLED LCP

A tungsten powder-filled, melt-processable LCP is prepared as now described. A combination of an LCP (pellet form) (95 wt.%) commercially available under the registered trade mark VECTRA A910, and tungsten powder (average particle size, 0.5 micron, 5 wt.%) is mixed together in a container. Thereafter, the container contents are added to the hopper of a vibrating feeder for a Werner and Pfleiderer 28mm ZSK extruder (twin screw), passed onto the vibrating trough, and fed into the extruder. The feeder, trough and throat of the extruder are under a positive nitrogen flow. Molten polymer at a temperature of 305-310°C and containing particulate tungsten, exits from the extruder in two strands, and is passed through a long water bath. Thereafter, the cooled strands are fed into a pelletizer, and the pellets are passed through a #4 sieve to remove pellets with "tails". To ensure a uniform distribution of the particulate filler, the filled pellets are fed into the extruder and the process is repeated.

### PREPARATION AND EVALUATION OF FILLED FIBER

Filled fiber is melt spun from VECTRA polymer compounded with 1 wt.% of tungsten metal powder, as now described. Chips are fed to a hopper for a conventional extruder, and molten polymer at a temperature of about 320°C and containing particulate tungsten, issues from the extruder. The mixture is passed to a metering pump (pump speed, 38 rpm; 0.584cc/revolution), then through a conventional filter pack that includes a spinneret screen (15-25 microns) and through a spinneret (hole count, 40; hole diameter, 1.27 x 10⁻⁴m (0.005"); hole length, 1.78 x 10⁻⁴m (0.007"). The resultant filaments converge into a lubricant guide and onto a take up roll 10.2 m/s (2000 ft/min), which forwards the filaments to a winder unit. Tungsten powder-filled, LCP fiber of about 400 denier (forty filaments) is obtained. The filler is generally uniformly distributed throughout the fiber.

The melt spinning process is repeated with variation (0.1-2.0 wt.% tungsten; extrusion temperature, 310-325°C; pump speed, 12-38 rpm; take-up speed, 2.5-10.2 m/s (500-2000 ft./min.); spinneret hole diameter, 1.3 x 10⁻⁴m - 3.3 x 10⁻⁴m (0.005-0.013") to obtain tungsten powder-filled, LCP fibers of a variety of deniers (forty filaments) as shown in Table 1.

With further reference to the Table, the metal-filled fiber is evaluated for the properties indicated and the results are set forth. Evaluation is conducted using the following test protocols: for tenacity, a ten inch gauge length of the fiber with 0.98 twist per cm (2.5 twist per inch) with a

**TABLE 1**

| % W | Denier | Tenacity (G/D) | Modulus (G/D) |
|---|---|---|---|
| 1.0 | 444 | 7.9 | 523 |
| " | 333 | 7.4 | 521 |
| " | 642 | 7.8 | 507 |
| " | 778 | 8.7 | 453 |
| 0.1 | 678 | 8.9 | 492 |
| 0.1 | 1020 | | |
| 0.5 | 639 | 8.4 | 516 |
| 2.0 | 439 | 7.4 | 474 |
| " | 724 | 7.7 | 482 |
| " | 770 | 8.1 | 455 |
| " | 847 | 7.4 | 444 |
| " | 1020 | | |
| Note: "G/D" means grams/denier. Denier is defined as the weight in grams of 9000 m of fiber. | | | |

**TABLE 2**

| | Cycles to Failure |
|---|---|
| 0.1% W | 259 |
| 0.5% W | 249 |
| 1.0% W | 251 |
| 2.0% W | 141 |
| SS wire | 2 |

ten percent strain rate; and for modulus, ASTM D885.

In addition, as indicated in Table 2, tungsten powder-filled fiber from VECTRA polymer, is evaluated for folding endurance (ASTM D-2176). A 0.45 kg (one pound) weight is used for tension. Stainless steel wire of 7.6 x 10⁻⁵m (0.003") diameter is also tested. The samples are of comparable weight. Each result set forth in Table 2 represents the average value from ten trials. Superior flex/fold resistance is found for the tungsten-filled fiber compared to the stainless steel wire.

Moreover, yarn from VECTRA polymer filled with tungsten powder (0.5, 1.0, 2.0 wt.% W, with dpf respectively of 16.0, 19.5 and 11.0) is tested for tenacity loss from laundering. As used herein, the term "dpf" is defined as the denier per filament. It is important that protective apparel can be repeatedly laundered without losing strength. The following washing procedure is used: Wash for 10 minutes at 60°C in 0.1% concentrated detergent (sold under the registered trade mark ARM & HAMMER) in distilled water. Rinse for 10 minutes at 40°C with distilled water. Fresh detergent/ water is used for wash, and fresh distilled water is used for rinse. Samples are washed for 1, 3, 5, 10 and 15 cycles, and air dried after the final cycle. No tenacity loss is observed after fifteen wash cycles.

Also, yarn from VECTRA polymer filled with tungsten powder (0.5, 1.0, 2.0 wt.% W, with denier respectively of 624, 406 and 773) is tested for tenacity loss from bleach exposure (2.62 % Chlorox, 5.24% Chlorox). Sufficient yarn is wrapped around a perforated stainless steel tube and immersed in the appropriate solution for the designated time (2, 12 and 24 hours). Thereafter, the yarn is rinsed with tap water and air dried. The dry yarn is wound on a small spool and tested using a ten inch gauge length with 0.98 twist per cm (2.5 twist per inch) with a ten percent strain rate. In excess of 85% strength retention is observed.

### EVALUATION OF CUT-RESISTANCE

Gloves made of composite yarn constituted as shown in Table 3, are prepared. The high tensile strength, polyethylene fiber is commercially available from Allied Corporation of New Jersey under the trade mark SPECTRA. The high tensile strength, aramid fiber is commercially available from Du Pont of Wilmington, Delaware under the trade mark KEVLAR.

A glove is slit up its side (to measure only one layer), opened up and clamped onto the sample holder (round, 0.102 m (4" diameter)) of an Instron cut-resistance tester. The sample holder is at a 45° angle to the floor. The glove is pre-tensioned with two lbs. of force and is oriented so that the blade cuts perpendicular to the knit.

The sample holder is raised to meet a stationary, 0.051 m (2") circular carbide blade at a cross-head speed of 0.127 m (5") per minute, and the force required to cut the sample is recorded by the Instron. The results are shown in Table 3.

The benefit of a filled, compared to an unfilled, LCP fiber is clearly shown in Table 3. Cut resistance-enhancement is particularly apparent when the 439 and 444 denier, filled VECTRAN M fibers are compared with the 400 denier, unfilled VECTRAN M fiber. Also shown is the superiority of a filled LCP fiber to an unfilled, high tensile strength polyethylene fiber.

The VECTRAN M fiber is more heat resistant than the polyethylene fiber. Also, the aramid fiber cannot withstand exposure to bleach.

A useful composite yarn may have a core strand or strands of the filled fiber with wrappings of conventional synthetic fiber, or may have a single or multiples wrappings of the filled fiber over a core of conventional synthetic fiber. It will be beneficial for the yarn to be made of high tensile strength fiber.

**TABLE 3**

| | Core | 1st Wrap | 2nd Wrap | Slash (kg) | (lb) |
|---|---|---|---|---|---|
| | 650 denier HS PE | 847 denier V/2%W | 847 denier V/2%W | 2.36 | 5.2 |
| | 650 denier HS PE | 778 denier V/1%W | 778 denier V/1%W | 2.63 | 5.8 |
| C-1 | 650 denier HS PE | 750 denier VECTRAN M | 750 denier VECTRAN M | 2.18 | 4.8 |
| C-2 | 650 denier HS PE | 1000 denier HS aramid | 1000 denier HS aramid | 2.00 | 4.4 |
| C-3 | 650 denier HS PE | 650 denier HS PE | 650 denier HS PE | 1.32 | 2.9 |
| | 650 denier HS PE | 439 denier V/2%W | 439 denier V/2%W | 1.91 | 4.2 |
| | 650 denier HS PE | 444 denier V/1%W | 444 denier V/1%W | 1.86 | 4.1 |
| C-4 | 650 denier HS PE | 400 denier VECTRAN M | 400 denier VECTRAN M | 1.18 | 2.6 |
| C-5 | 650 denier HS PE | 400 denier HS aramid | 400 denier HS aramid | 1.13 | 2.5 |
| C-6 | 650 denier HS PE | 375 denier HS PE | 375 denier HS PE | 1.32 | 2.9 |
| "HS means high tensile strength; "PE" means polyethylene; "V" means VECTRAN M; "C-1" means Comparative Example 1; 1st and 2nd wraps have wrap per cm (WPI) of 3.94 (10). | | | | | |

Typically, the windings are between 1.57 to 7.87 turns per cm (four and twenty turns per inch), generally preferbly about 3.15 to 4.72 turns per cm (eight to twelve turns per inch).

The present invention may be carried out with various modifications without departing from the spirit or essential attributes thereof, and accordingly, reference should be made to the appended claims, rather than to the foregoing specification as indicating the scope of the invention.

## Claims

1. A fiber comprising a liquid crystalline polymer filled with a material having a Mohs Hardness value of at least 3, wherein said material is present in an amount of from 0.02 to 5 wt.% and the average particle size of the filler is less than 20 µm.

2. The fiber of claim 1, wherein said liquid crystalline polymer is melt-processable.

3. The fiber of claim 1, wherein said liquid crystalline polymer is a polyester.

4. The fiber of claim 1, wherein said liquid crystalline polymer is a wholly aromatic polyester.

5. The fiber of claim 1, wherein said liquid crystalline polymer is a wholly aromatic polyester made from p-hydroxybenzoic acid and 6-hydroxynaphthoic acid monomers.

6. The fiber of claim 1, wherein said material is an elemental metal.

7. The fiber of claim 1, wherein said material is in the form of a powder.

8. The fiber of claim 1, wherein said material is present in an amount up to 2 wt. %.

9. The fiber of claim 1, wherein said material is present in an amount ranging from 0.1 to 1 wt. %.

10. A liquid crystalline polymeric fiber filled with a metal having a Mohs Hardness value of at least 3, wherein said filler metal is present in an amount of from 0.02 to 5 wt. % and the average particle size of the metal filler is less than 20 µm.

11. The fiber of claim 10, wherein said metal is an elemental metal.

12. The fiber of claim 10, wherein said metal is in the form of a powder.

13. The fiber of claim 10, wherein said metal is present in an amount of up to 2 wt.%.

14. The fiber of claim 10, wherein said metal is present in an amount ranging from 0.1 to 1 wt.%.

15. A fabric comprising the fiber of claim 1.

16. A cut-resistant glove comprising the fiber of claim 1.

## Patentansprüche

1. Faser, die ein flüssigkristallines Polymer umfasst, das mit einem Material mit einem Mohs-Härtewert von wenigstens 3 gefüllt ist, wobei das Material in einer Menge von 0,02 bis 5 Gew.-% vorhanden ist und die mittlere Teilchengröße des Füllstoffs kleiner als 20 µm ist.

2. Faser gemäß Anspruch 1, wobei das flüssigkristalline Polymer in der Schmelze verarbeitbar ist.

3. Faser gemäß Anspruch 1, wobei das flüssigkristalline Polymer ein Polyester ist.

4. Faser gemäß Anspruch 1, wobei das flüssigkristalline Polymer ein vollständig aromatischer Polyester ist.

5. Faser gemäß Anspruch 1, wobei das flüssigkristalline Polymer ein vollständig aromatischer Polyester ist, der aus p-Hydroxybenzoesäure- und 6-Hydroxynaphthoesäure-Monomeren hergestellt ist.

6. Faser gemäß Anspruch 1, wobei das Material ein elementares Metall ist.

7. Faser gemäß Anspruch 1, wobei das Material in Form eines Pulvers vorliegt.

8. Faser gemäß Anspruch 1, wobei das Material in einer Menge von bis zu 2 Gew.-% vorhanden ist.

9. Faser gemäß Anspruch 1, wobei das Material in einer Menge im Bereich von 0,1 bis 1 Gew.-% vorhanden ist.

10. Flüssigkristalline polymere Faser, die mit einem Metall mit einem Mohs-Härtewert von wenigstens 3 gefüllt ist, wobei das Füllstoffmetall in einer Menge von 0,02 bis 5 Gew.-% vorhanden ist und die mittlere Teilchengröße des metallischen Füllstoffs kleiner als 20 µm ist.

11. Faser gemäß Anspruch 10, wobei das Metall ein elementares Metall ist.

12. Faser gemäß Anspruch 10, wobei das Metall in Form eines Pulvers vorliegt.

13. Faser gemäß Anspruch 10, wobei das Metall in einer Menge von bis zu 2 Gew.-% vorhanden ist.

14. Faser gemäß Anspruch 10, wobei das Metall in einer Menge im Bereich von 0,1 bis 1 Gew.-% vorhanden ist.

15. Textilstoff, der die Faser von Anspruch 1 umfasst.

16. Gegen Schnitte unempfindlicher Handschuh, der die Faser von Anspruch 1 umfasst.

## Revendications

1. Fibre comprenant un polymère cristallin liquide additionné d'une matière de charge ayant une valeur de dureté Mohs d'au moins 3, dans laquelle ladite matière est présente en une quantité de 0,02 à 5 % en poids-et le diamètre moyen de particules de la charge est inférieur à 20 µm.

2. Fibre suivant la revendication 1, dans laquelle le polymère cristallin liquide est apte au traitement en masse fondue.

3. Fibre suivant la revendication 1, dans laquelle le polymère cristallin liquide est un polyester.

4. Fibre suivant la revendication 1, dans laquelle le polymère cristallin liquide est un polyester totalement aromatique.

5. Fibre suivant la revendication 1, dans laquelle le polymère cristallin liquide est un polyester totalement aromatique produit à partir de monomères acide p-hydroxybenzoïque et acide 6-hydroxynaphtoïque.

6. Fibre suivant la revendication 1, dans laquelle la matière consiste en un métal élémentaire.

7. Fibre suivant la revendication 1, dans laquelle la matière est sous forme d'une poudre.

8. Fibre suivant la revendication 1, dans laquelle la matière est présente en une quantité allant jusqu'à 2 % en poids.

9. Fibre suivant la revendication 1, dans laquelle la matière est présente en une quantité allant de 0,1 à 1 % en poids.

10. Fibre polymère cristalline liquide additionnée d'une charge consistant en un métal ayant une valeur de dureté Mohs d'au moins 3, dans laquelle ledit métal servant de charge est présent en une quantité de 0,02 à 5 % en poids et le diamètre moyen de particules du métal servant de charge est inférieur à 20 µm.

11. Fibre suivant la revendication 10, dans laquelle le métal est un métal élémentaire.

12. Fibre suivant la revendication 10, dans laquelle le métal est sous forme d'une poudre.

13. Fibre suivant la revendication 10, dans laquelle le métal est présent en une quantité allant jusqu'à 2 % en poids.

14. Fibre suivant la revendication 10, dans laquelle le métal est présent en une quantité allant de 0,1 à 1 % en poids.

15. Etoffe comprenant la fibre suivant la revendication 1.

16. Gant résistant aux entailles, comprenant la fibre suivant la revendication 1.
